# EUROPEAN PATENT APPLICATION

(11) **EP 4 650 034 A1**
(43) Date of publication of application: **19.11.2025**
(21) Application number: 24909380.8
(22) Date of filing: 18.02.2024
(51) Int. Cl.: B01D 53/14, B01D 53/18, B01D 53/62, B01D 53/78, F23J 15/06

(54) **WET CARBON CAPTURE PROCESS INTEGRATING WATER BALANCE CONTROL AND IN-SYSTEM HEAT UTILIZATION COUPLING**

(30) Priority: 28.12.2023 CN 202311837562
(71) Applicant: TONGXING ENVIRONMENTAL PROTECTION TECHNOLOGY CO., LTD, Maanshan, Anhui 238100 (CN)
(72) Inventor: HUANG, Zhongbin, Maanshan, Anhui 238100 (CN); ZHENG, Yong, Maanshan, Anhui 238100 (CN); LV, Wenbin, Maanshan, Anhui 238100 (CN); YE, Huang, Maanshan, Anhui 238100 (CN)
(74) Representative: Patent 42
(86) International application number: PCT/CN2024/077393
(87) International publication number: WO 2025/138408

(57) **Abstract**

Disclosed is a wet carbon capture process coupling water balance control with utilization of internal heat of a system. The wet carbon capture process includes a pretreatment unit, an absorption unit, a regeneration unit, and a separation unit connected in sequence, wherein the separation unit is configured to decompose a regeneration gas in the regeneration unit into water and carbon dioxide. The wet carbon capture process further includes a recovery unit arranged between the regeneration unit and the separation unit, the recovery unit includes a regeneration gas washing tower, a bottom gas inlet end of the regeneration gas washing tower is in communication with a regeneration gas outlet of the regeneration unit, and a top solution inlet end of the regeneration gas washing tower is in communication with an external circulation flow path of a cooling section of a pretreatment tower.

## Description

### TECHNICAL FIELD

The present disclosure relates to the technical field of wet carbon capture, in particular to a wet carbon capture process coupling water balance control with utilization of internal heat of a system.

### BACKGROUND

Carbon emissions from low partial pressure gas sources are an indispensable part to be captured for achieving "carbon neutrality" since they account for 70% or higher of the total carbon dioxide to be captured in industry at present. Based on the existing engineering experience at home and abroad, it is the first choice to capture and recover carbon from low partial pressure gas sources on a large scale by using the wet process.

The wet process is still difficult to implement water balance control of a capture device or fully utilize internal heat besides degradation and volatilization loss of its essential absorbents. The existing process is restricted in flexibility of entire water balance control since water balance merely relies on a temperature difference of flue gas entering and leaving an absorption tower and temperatures of the flue gas leaving the absorption tower are tied to a temperature of cooling water and volatilization of the absorbent. Especially in recent years, water balance control of a traditional process has become increasingly hard after an introduction and use of a series of high-concentration absorbents such as phase change absorbents and low-moisture water absorbents. In addition, it is a pressing problem to implement the highly automated operation of a carbon capture device after engineering application, in which the water balance operation flexibility is an essential factor.

The water balance refers to the balance between the amount of moisture carried by a carbonaceous gas source into the carbon capture system and the amount of moisture carried by gas of a discharge system during the normal operation of the carbon capture device. Since the balance is very crucial to engineering, the fluctuation range and frequency of imbalance should be controlled to the maximum extent even if it is impossible to guarantee the dynamic balance all the time. With flue gas from a power plant as an example of a capture object, the flue gas usually contains saturated water vapor, and is cooled and purified by pretreatment systems such as a bath tower before entering the absorption tower. During cooling, continuous liquid discharge and alkali replenishment are required since part of water vapor will liquefy and remain in the bath tower and an alkali wash solution will consequently increase uninterruptedly in the bath tower. In this way, waste liquid discharge and consumption of alkali are both increased. In addition, the water balance control of an absorption-regeneration unit can merely rely on adjustment of temperatures of the flue gas entering and the absorption tower. Such adjustment is vulnerable to numerous factors, cannot be implemented in a wide range and is limited in extent consequently.

At present, the capture process of the wet device is mainly optimized from aspects of improvement in utilization of internal heat of the system and exertion of the maximum absorption efficiency of the absorbent, specifically, optimized temperature distribution of the absorption-regeneration unit, utilization of secondary steam in lean solution flash mechanical vapor recompression (MVR), and the recovery of heat from regeneration gas based on a heat pump principle. Despite that the methods can achieve certain results after being practiced in some devices, the utilization of regeneration gas heat is scarcely improved through the improvement and optimization of the process, and improvement in redundancy of the process and reduction of waste liquid discharge are rarely reported for the system water balance control.

### SUMMARY

In order to solve the problems in the prior art, the present disclosure provides a wet carbon capture process coupling water balance control with utilization of internal heat of a system, and a specific technical solution is as follows.

The wet carbon capture process coupling water balance control with utilization of internal heat of a system includes a pretreatment unit, an absorption unit, a regeneration unit, and a separation unit connected in sequence, wherein:
the pretreatment unit includes a pretreatment tower, the pretreatment tower is sequentially provided with an alkali washing section and a cooling section from bottom to top, an alkali wash solution is sprayed in the alkali washing section, and wash water is sprayed in the cooling section of the pretreatment tower;
the absorption unit is configured to absorb carbon dioxide in flue gas through an absorbent and produce a rich solution;
the regeneration unit is configured to desorb the rich solution of the absorption unit, produce a lean solution and regeneration gas, and return the lean solution to the absorption unit to form an absorbent circulation flow path;
the separation unit is configured to decompose the regeneration gas in the regeneration unit into water and carbon dioxide; and
the wet carbon capture process further includes a recovery unit arranged between the regeneration unit and the separation unit, wherein the recovery unit includes a regeneration gas washing tower, a bottom gas inlet end of the regeneration gas washing tower is in communication with a regeneration gas outlet of the regeneration unit, and a top solution inlet end of the regeneration gas washing tower is in communication with an external circulation flow path of the cooling section of the pretreatment tower; and
the wash water that overflows from a water washing section of the pretreatment tower enters the regeneration gas washing tower to be sprayed on and precool the regeneration gas.

In some embodiments, the absorption unit includes:
an absorption tower, where the absorption tower sequentially includes an absorption section and a retention section from bottom to top, and the absorbent is sprayed in the absorption section; and
a water wash solution cooler, where the water wash solution cooler is in communication with the retention section of the absorption tower through a one-way pipe outside the absorption tower, a water wash solution is sprayed in the retention section of the absorption tower, and the retention section cooperates with the water wash solution cooler to form a water wash solution circulation flow path.

In some embodiments, the recovery unit further includes:
a secondary washing tower, where a solution inlet end of the secondary washing tower is in communication with a solution outlet end of the regeneration gas washing tower, a gas inlet end of the secondary washing tower is in communication with a gas outlet end of the absorption tower, and the secondary washing tower is externally connected to a one-way pipe outside the secondary washing tower to form a wash water circulation flow pipe; and
wash water flowing out of a bottom of the regeneration gas washing tower entering the secondary washing tower to be circularly sprayed on ex-tower flue gas out of the absorption tower and to be evaporated and released.

In some embodiments, the regeneration unit includes:
a regeneration tower, where a top of the regeneration tower is in communication with a solution outlet of the absorption tower, and a bottom of the regeneration tower is in communication with a solution inlet of the absorption tower;
a reboiler in communication with the regeneration tower through a one-way pipe outside the regeneration tower;
a lean solution cooler, where the lean solution cooler is arranged on a communication pipe between a solution outlet of the regeneration tower and the solution inlet of the absorption tower and is configured to cool the lean solution; and
a lean-rich solution heat exchanger, where a rich solution before entering the regeneration tower and the lean solution after flowing out of the regeneration tower both flow through the lean-rich solution heat exchanger for heat exchange between the rich solution and the lean solution.

The present disclosure has the following beneficial effects.
(1) By additionally arranging the regeneration gas washing tower, regeneration gas discharged from the regeneration tower can be precooled by wash water that overflows from the absorption tower, such that a workload of the regeneration gas cooler is reduced. In addition, by additionally arranging the secondary washing tower, wash water discharged from the regeneration gas washing tower can be secondarily sprayed on the ex-tower flue gas out of the absorption tower. On one hand, the wash water is evaporated and released, thus achieving water balance. On the other hand, the wash water can intercept the absorbent escaping from the ex-tower flue gas out of the absorption tower secondarily to reduce the loss of the absorbent.
(2) A cooling structure of a traditional alkali wash solution is divided into the alkali washing section and the cooling section, and the alkali washing section merely removes impurities from the flue gas, such that it is no longer necessary to continuously replenish the pretreatment unit with alkali, and the consumption of the alkali is reduced.

### BRIEF DESCRIPTION OF THE DRAWINGS

FIG. 1 is a schematic diagram of an entire structure of a wet carbon capture process coupling water balance control with utilization of internal heat of a system.
FIG. 2 is a schematic structural diagram of a pretreatment unit and an absorption unit.
FIG. 3 is a schematic structural diagram of a regeneration unit and a separation unit.
FIG. 4 is a schematic structural diagram of a recovery unit and a separation unit.

In the figures: 110: pretreatment tower; 120: wash water cooler; 210: absorption tower; 220: water wash solution cooler; 310: regeneration tower; 320: reboiler; 330: lean solution cooler; 340: lean-rich solution heat exchanger; 410: regeneration gas cooler; 420: gas-liquid separator; 510: regeneration gas washing tower; and 520: secondary washing tower.

### DETAILED DESCRIPTIONS

In order to make objectives, technical solutions and advantages of examples of the present disclosure clearer, the technical solutions of the present disclosure will be clearly and completely described with reference to the examples.

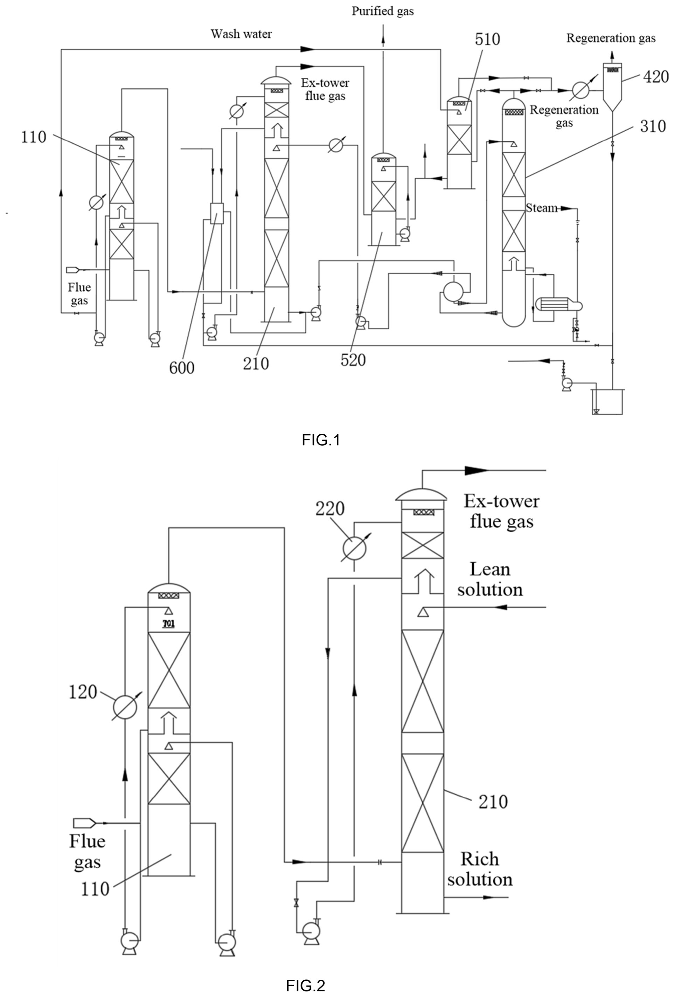

The present disclosure provides a wet carbon capture process coupling water balance control with utilization of internal heat of a system. FIG. 1 is a schematic diagram of an entire structure of a wet carbon capture process coupling water balance control with utilization of internal heat of a system. As shown in FIG. 1, the wet carbon capture process coupling water balance control with utilization of internal heat of a system includes a pretreatment unit, an absorption unit, a regeneration unit, and a separation unit connected in sequence, wherein:
the pretreatment unit is configured to remove impurities from flue gas and reduce a temperature of the flue gas;
the absorption unit is configured to absorb carbon dioxide in the flue gas through an absorbent and produce a rich solution;
the regeneration unit is configured to desorb the rich solution of the absorption unit, produce a lean solution and regeneration gas, and return the lean solution to the absorption unit to form an absorbent circulation flow path; and
the separation unit is configured to decompose the regeneration gas in the regeneration unit into water and carbon dioxide.

FIG. 2 is a schematic structural diagram of a pretreatment unit and an absorption unit. As shown in FIG. 2, the pretreatment unit includes:
a pretreatment tower 110, where the pretreatment tower 110 is sequentially provided with an alkali washing section and a cooling section from bottom to top, an alkali wash solution is sprayed in the alkali washing section, and the alkali washing section of the pretreatment tower 110 is externally connected to a one-way pipe outside the pretreatment tower to form an alkali wash solution circulation flow path; and
a wash water cooler 120, where the wash water cooler 120 is in communication with the cooling section of the pretreatment tower 110 through a one-way pipe outside the pretreatment tower, wash water is sprayed in the cooling section of the pretreatment tower 110, and the cooling section cooperates with the wash water cooler 120 to form a wash water circulation flow path.

It should be noted that all the one-way pipes outside the pretreatment tower are provided with pumps for driving the solution to flow. Meanwhile, with reference to FIG. 1, a washing tank 600 is further disposed in the present disclosure. The washing tank 600 is in one-way communication with all the pumps in the present disclosure and stores a solution for avoiding air suction, which belongs to the conventional technical means known to those skilled in the art, and will not be repeated herein.

It should be noted that the water washing section and the alkali washing section are separated by a solution collection tray, the solution in the water washing section may be intercepted by the solution collection tray, and gas in the alkali washing section can enter the water washing section through the solution collection tray.

It should be noted that in the present disclosure, sodium hydroxide or sodium bicarbonate may be used as the alkali wash solution to deal with the flue gas. In some other examples, the alkali wash solution may be set specifically according to gas to be treated, which is not limitation to the present disclosure.

In the process, the flue gas enters from a gas inlet of the pretreatment tower 110, passes through the alkali washing section and the cooling section in turn, and then is discharged from a gas outlet. The flue gas is purified by the alkali washing section and cooled by the cooling section. In the present disclosure, a cooling structure of a traditional alkali wash solution is divided into the alkali washing section and the cooling section, and the alkali washing section merely removes impurities from the flue gas, such that it is no longer necessary to continuously replenish the pretreatment unit with alkali, and the consumption of the alkali is reduced.

With further reference to FIG. 2, the absorption unit includes:
an absorption tower 210, where the absorption tower 210 sequentially includes an absorption section and a retention section from bottom to top, and an absorbent is sprayed in the absorption section; and
a water wash solution cooler 220, where the water wash solution cooler 220 is in communication with the retention section of the absorption tower 210 through a one-way pipe outside the absorption tower, a water wash solution is sprayed in the retention section of the absorption tower 210, and the retention section cooperates with the water wash solution cooler 220 to form a water wash solution circulation flow path.

It should be noted that in the present disclosure, a traditional organic amine absorbent represented by monoethanolamine, diethanolamine, aminomethyl propanol, piperazine, etc., may be selected as the absorbent. Amino acid salts such as potassium glycinate or phase change absorbents may also be used.

In the process, the flue gas discharged from the pretreatment tower 110 enters the absorption tower 210 and passes through the absorption section and the retention section in turn. The carbon dioxide in the flue gas may be absorbed by spraying of the absorption section. Since a part of the absorbent may evaporate and escape with the flue gas, and circulating water washing in the retention section may intercept the absorbent brought out by the flue gas by re-liquefying the absorbent, such that a loss of the absorbent is reduced.

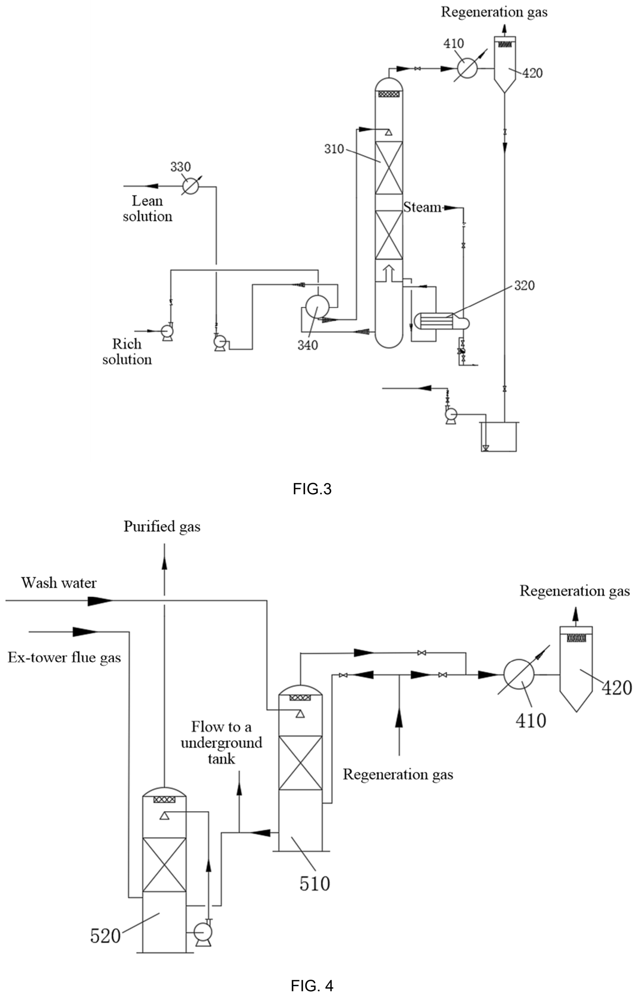

FIG. 3 is a schematic structural diagram of a regeneration unit and a separation unit. As shown in FIG. 3, the regeneration unit includes:
a regeneration tower 310, where a top of the regeneration tower 310 is in communication with a solution outlet of the absorption tower 210, and a bottom of the regeneration tower 310 is in communication with a solution inlet of the absorption tower 210;
a reboiler 320 in communication with the regeneration tower 310 through a one-way pipe outside the regeneration tower;
a lean solution cooler 330, where the lean solution cooler is arranged on a communication pipe between a solution outlet of the regeneration tower 310 and the solution inlet of the absorption tower 210 and is configured to cool the lean solution; and
a lean-rich solution heat exchanger 340, where a rich solution before entering the regeneration tower 310 and a lean solution after flowing out of the regeneration tower 310 both flow through the lean-rich solution heat exchanger 340 for heat exchange between the rich solution and the lean solution.

In the process, the rich solution flowing out of the absorption tower 210 enters the regeneration tower 310 after passing through the lean-rich solution heat exchanger 340, and then converges and enters into the reboiler 320 through the one-way pipe outside the regeneration tower. Carbon dioxide and water in the rich solution are evaporated by the reboiler 320, and desorption is implemented. The desorbed high-temperature lean solution enters into the absorption tower 210 after passing through the lean-rich solution heat exchanger 340 and the lean solution cooler 330 in turn, thus forming recycling of the absorbent. In the present disclosure, the regeneration tower 310, the reboiler 320 and the lean solution cooler 330 desorb the absorbent to form the recycling of the absorbent. In addition, the lean solution heat exchanger 340 is configured to exchange heat between the low-temperature rich solution and the high-temperature lean solution; on one hand, the rich solution is heated to reduce a workload of reboiler 320, and on the other hand, the lean solution is cooled to reduce a workload of lean solution cooler 330.

It should be noted that the rich solution is a saturated absorbent and the lean solution is an unsaturated absorbent.

It should be noted that the reboiler 320 uses an external steam for heating, preferably a steam discharged from other combustion units.

With further reference to FIG. 3, the separation unit includes, a regeneration gas cooler 410 and a gas-liquid separator 420 connected in sequence, wherein:
the regeneration gas cooler is in communication with a gas outlet of the regeneration tower 310 and is configured to cool water vapor in the regeneration gas; and
the gas-liquid separator is configured to separate carbon dioxide from water.

It should be noted that the regeneration gas is a mixed gas of water vapor and carbon dioxide.

In the process, the regeneration gas cooler 410 may cool the water vapor, such that the water vapor in the regeneration gas is liquefied. A gas-liquid mixture is separated by the gas-liquid separator 420, such that a low-temperature regeneration gas of a mixture of the carbon dioxide and a part of the water vapor is discharged.

FIG. 4 is a schematic structural diagram of a recovery unit and a separation unit. As shown in FIG. 4, the wet carbon capture process coupling water balance control with utilization of internal heat of a system further includes a recovery unit arranged between the regeneration unit and the separation unit. The recovery unit includes:
a regeneration gas washing tower 510, where a gas inlet end of the regeneration gas washing tower 510 is in communication with a gas outlet end of the regeneration tower 310, and a solution inlet end of the regeneration gas washing tower 510 is in communication with an external circulation flow path of the cooling section of the pretreatment tower 110; and
a secondary washing tower 520, where a solution inlet end of the secondary washing tower 520 is in communication with a solution outlet end of the regeneration gas washing tower 510, a gas inlet end of the secondary washing tower 520 is in communication with a gas outlet end of the absorption tower 210, and the secondary washing tower 520 is externally connected to a one-way pipe outside the secondary washing tower to form a wash water circulation flow pipe.

In the process, when the wash water in the water washing section of the pretreatment tower 110 overflows to a top of the regeneration gas washing tower 510 and is sprayed, the regeneration gas enters from a bottom of the regeneration gas washing tower 510 and exchanges heat with the wash water. Through a design of the regeneration gas washing tower 510, redundant wash water on the pretreatment tower 110 may be used to cool the regeneration gas discharged from the regeneration tower 310, the regeneration gas is precooled, and a workload of the regeneration gas cooler 410 is reduced. In addition, the secondary washing tower 520 secondarily sprays circularly wash water discharged from the regeneration gas washing tower 510 on the flue gas from the absorption tower 210, such that the wash water can be evaporated and discharged from the gas outlet of the secondary washing tower 520, and water balance is implemented. In addition, the wash water discharged from the regeneration gas washing tower 510 may be secondarily sprayed on the ex-tower flue gas out of the absorption tower 210 through the secondary washing tower 520, so that the wash water is evaporated and discharged from the gas outlet of the secondary washing tower 520, thus achieving water balance. Meanwhile, the wash water can intercept the absorbent escaping from the ex-tower flue gas out of the absorption tower secondarily to reduce the loss of the absorbent.

It should be noted that in specific process, a height of the solution outlet of the regeneration gas washing tower 510 may be set higher than that of the solution inlet of the secondary washing tower 520, such that the wash solution may directly flow into the secondary washing tower 520 by gravity.

The present disclosure has the following benefits.

Firstly, the wash water in an upper section of the pretreatment tower is sprayed on and cools the regeneration gas out of the regeneration tower for direct heat exchange, such that, heat exchange efficiency is improved and cooling water consumption of the regeneration gas cooler is reduced.

Secondly, due to a lower temperature of the upper section of the pretreatment tower, a large amount of condensed water is discharged in the form of steam through the secondary washing tower that is at a high temperature, such that wastewater discharge and alkali consumption of the pretreatment tower are greatly reduced.

Thirdly, through secondary washing of purified gas, the escape of the absorbent within the purified gas can be reduced.

Lastly, the operation flexibility of water balance control of the absorption tower is improved, that is, a temperature adjustment range of flue gas entering and leaving the capture system is greatly expanded, which can better ensure a solubility of the absorbent in the capture system.

A comparison of flue gas treatment based on the above carbon capture process in the present disclosure and that based on a traditional wet carbon capture process is shown in Table 1.

**Table 1**

| 10,000 tons/year CO₂ capture in a coal-fired power plant (using a monoethanolamine (MEA) aqueous solution of 20 wt% as an absorbent) | | | | | |
|---|---|---|---|---|---|
| Main indicators of a capture device | Wastewater discharge from a pretreatment tower (kg/tCO₂) | NaOH consumption (kg/tCO₂) | Organic amine escape (kg/tCO₂) | Circulating cooling water consumption (t/tCO₂) | Steam consumption (t/tCO₂) |
| Traditional wet process | 300-350 | 0. 8 | 1. 2 | 85 | 1. 8 |
| Solution of the present disclosure | 30-50 | 0. 4 | 0. 9 | 66 | 1.65 |

The above embodiments are merely used to illustrate the technical solution of the present disclosure rather than to limit same.

## Claims

1. A wet carbon capture process coupling water balance control with utilization of internal heat of a system, comprising: a pretreatment unit, an absorption unit, a regeneration unit, and a separation unit connected in sequence, wherein:
the pretreatment unit includes a pretreatment tower, the pretreatment tower is sequentially provided with an alkali washing section and a cooling section from bottom to top, an alkali wash solution is sprayed in the alkali washing section, and wash water is sprayed in the cooling section of the pretreatment tower;
the absorption unit is configured to absorb carbon dioxide in flue gas through an absorbent and produce a rich solution;
the regeneration unit is configured to desorb the rich solution of the absorption unit, produce a lean solution and regeneration gas, and return the lean solution to the absorption unit to form an absorbent circulation flow path;
the separation unit is configured to decompose the regeneration gas in the regeneration unit into water and carbon dioxide; and
the wet carbon capture process further comprises a recovery unit arranged between the regeneration unit and the separation unit, wherein:
the recovery unit includes a regeneration gas washing tower, a bottom gas inlet end of the regeneration gas washing tower is in communication with a regeneration gas outlet of the regeneration unit, and a top solution inlet end of the regeneration gas washing tower is in communication with the cooling section of the pretreatment tower; and
the wash water that overflows from a water washing section of the pretreatment tower enters the regeneration gas washing tower to be sprayed on and precool the regeneration gas.

2. The wet carbon capture process coupling water balance control with utilization of internal heat of a system according to claim 1, wherein the absorption unit includes:
an absorption tower, wherein the absorption tower sequentially includes an absorption section and a retention section from bottom to top, and the absorbent is sprayed in the absorption section; and
a water wash solution cooler, wherein the water wash solution cooler is in communication with the retention section of the absorption tower through a one-way pipe outside the absorption tower, a water wash solution is sprayed in the retention section of the absorption tower, and the retention section cooperates with the water wash solution cooler to form a water wash solution circulation flow path.

3. The wet carbon capture process coupling water balance control with utilization of internal heat of a system according to claim 2, wherein the recovery unit further includes:
a secondary washing tower, wherein a solution inlet end of the secondary washing tower is in communication with a solution outlet end of the regeneration gas washing tower, a gas inlet end of the secondary washing tower is in communication with a gas outlet end of the absorption tower, and the secondary washing tower is externally connected to a one-way pipe outside the secondary washing tower to form a wash water circulation flow pipe; and
wash water flowing out of a bottom of the regeneration gas washing tower entering the secondary washing tower to be circularly sprayed on ex-tower flue gas out of the absorption tower and to be evaporated and released.

4. The wet carbon capture process coupling water balance control with utilization of internal heat of a system according to claim 3, wherein the regeneration unit further includes:
a regeneration tower, wherein a top of the regeneration tower is in communication with a solution outlet of the absorption tower, and a bottom of the regeneration tower is in communication with a solution inlet of the absorption tower;
a reboiler in communication with the regeneration tower through a one-way pipe outside the regeneration tower;
a lean solution cooler, wherein the lean solution cooler is arranged on a communication pipe between a solution outlet of the regeneration tower and the solution inlet of the absorption tower and is configured to cool the lean solution; and
a lean-rich solution heat exchanger, wherein the rich solution before entering the regeneration tower and the lean solution after flowing out of the regeneration tower both flow through the lean-rich solution heat exchanger for heat exchange between the rich solution and the lean solution.
